# EUROPÄISCHE PATENTSCHRIFT

(11) **EP 2 399 446 B1**
(45) Veröffentlichungstag und Bekanntmachung des Hinweises auf die Patenterteilung: **26.08.2015**
(21) Anmeldenummer: 10009265.9
(22) Anmeldetag: 07.09.2010
(51) Int. Cl.: A01D 78/10

(54) **Heuwerbungsmaschine**
Haymaking machine
Machine de fenaison

(30) Priorität: 23.06.2010 DE 102010024833
(43) Veröffentlichungstag der Anmeldung: 28.12.2011
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- DE-B- 1 219 719
- FR-A- 1 592 533
- GB-A- 1 237 598
- NL-A- 6 512 295

## Beschreibung

Die Erfindung betrifft eine Heuwerbungsmaschine, nach dem Oberbegriff des Anspruches 1.

### Stand der Technik

Aus FR-A-1 592 533 ist eine Heuwerbungsmaschine mit wenigstens einem um eine Hochachse umlaufenden Rechkreisel bekannt, mit Zinkenarme aufweisenden Rechzinken, an deren um eine Wickelachse geformten Federwindungen sich Federschenkel anschließen. Die axialen Anstellwinkel der Wickelachsen lassen sich relativ zur Hochachse verstellen.

DE-A- 1 219 719 offenbart ein landwirtschaftliches Mehrzweckgerät zum Anhängen an Ackerschlepper, bei welchem der die Arbeitswerkzeuge tragende, aus sich radial erstreckenden waagerechten Stäben bestehende Geräteteil um eine lotrecht- oder schräg stehende Achse drehbar gelagert ist, wobei die waagerechten, sich radial erstreckenden Stäbe aus Federblättern bestehen, an denen wahlweise Eggenzinken, Heurechen oder Haumesser anschliessbar sind, und wobei die Federblätter durch weitere schwenkbar an ihnen sitzende Federblätter gegeneinander abstützbar oder radial verlängerbar sind, derart, dass das rotierende Gerät zum Eggen und Krautschlagen einen kleineren oder zur Heuwerbung einen größeren Aktionsradius erhält. Die Heurechen sind an winkelverstellbaren Rechenträgern angeordnet.

GB-A-1 237 598 zeigt eine Heuerntemaschine mit mindestens einem um eine stehende Achse rotierend angetriebenen Rechenrad mit sternförmig angeordneten, mit Zinkenträgern versehenen Radarmen, welche in einer eine Rechzinkenreihe aufwärts und entgegen Umlaufrichtung verschwenkenden Bewegung gesteuert sind, wobei die Zinkenträger an den Radarmen um eine vertikale Achse verschwenk- und feststellbar sind.

Bei der Heuwerbungsmaschine handelt es sich um einen Kreiselzetter mit um aufrechte und nach vorn in Fahrtrichtung geneigten Kreiselachsen umlaufend angetriebenen Zinkenkreiseln. Die Zinkenkreisel weisen mehrere Zinkenarme auf, an deren freien Enden Rechzinken befestigt sind, die das am Boden liegende Grünfutter während der Vorwärtsbewegung des Kreisetzetters erfassen, aufnehmen und nach hinten, d.h. entgegen der Fahrtrichtung in einem Parabelflug wegschleudern, welches den eigentlichen Lüftungs- und Wendevorgang erzeugt. Bedingt durch die Umlaufbewegung und die Vorwärtsbewegung der Rechzinken nehmen die Federschenkel das Grünfutter auf und beschleunigen dieses so, dass diese Beschleunigungskräfte in den federnden Windungen aufgenommen werden müssen und dabei zugleich an dem Zinkenarm abgestützt werden müssen.

Die Rechzinken weisen demnach in bekannterweise federnde Windungen auf, so dass die auf Biegung beanspruchten Federschenkel, bedingt durch die federnden Windungen der Rechzinken, sich gegenüber ihrer Befestigung an ihren Zinkenarmen nachgiebig und damit Kraftamplituden mindernd abstützen können. Die maximale Beanspruchung hinsichtlich der Biegespannung entsteht dabei im Übergangsbereich des Federschenkels in die erste federnde Windung, welche zugleich im Falle eines Ermüdungsbruches auch die Bruchstelle vorgibt.

### Aufgabenstellung

Hier setzt die Aufgabe der Erfindung an mit dem Ziel, eine Lösung vorzuschlagen, welche der Gefahr eines Ermüdungsbruches der Rechzinken entgegenwirkt und damit die Lebensdauer, bzw. die Zeitstandsfestigkeit eines Rechzinkens wesentlich verlängert.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

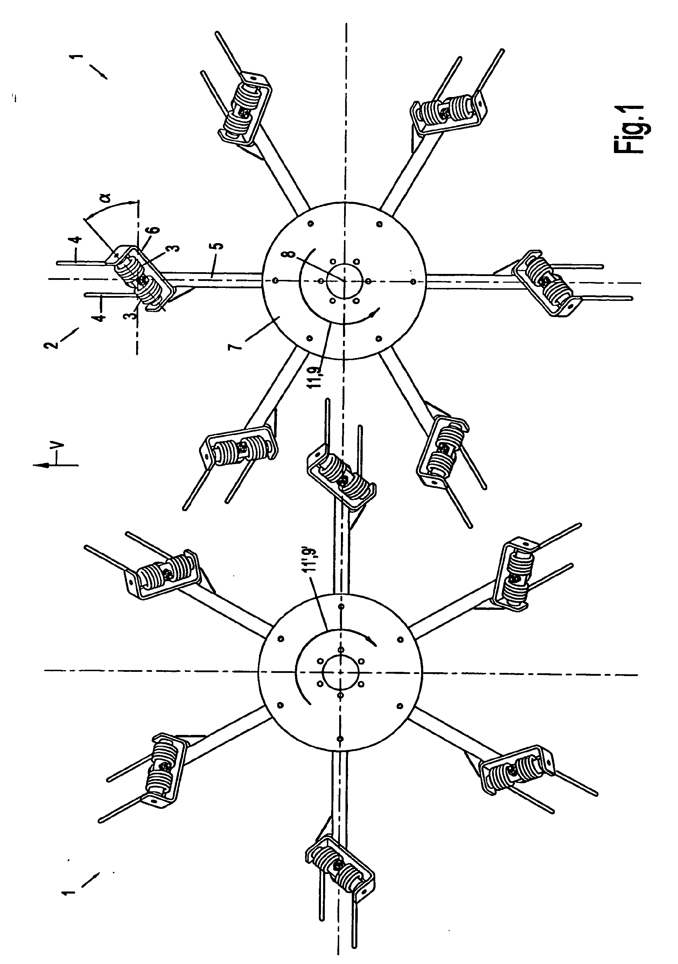

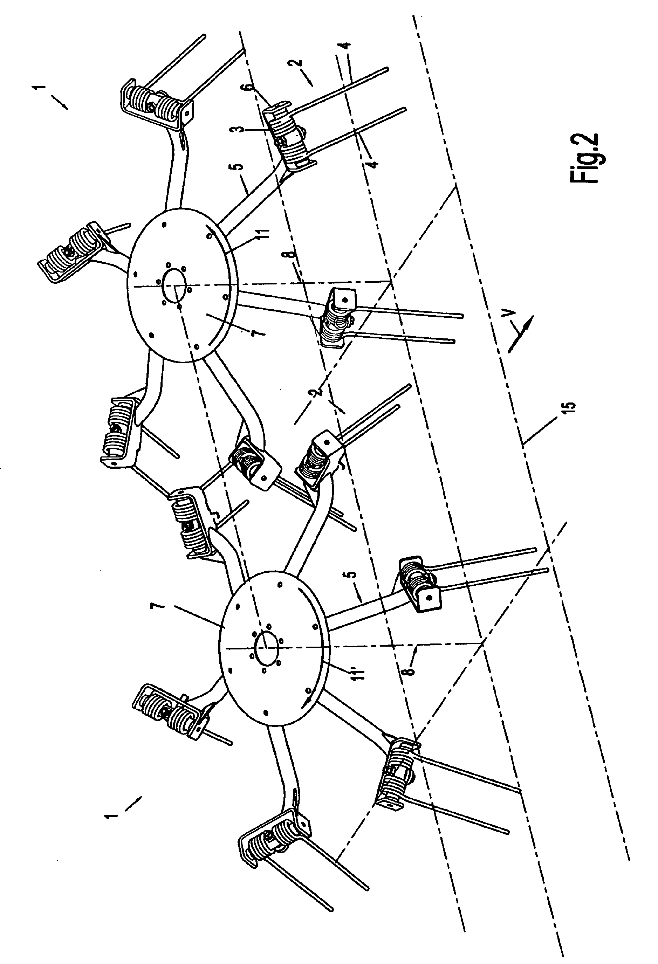

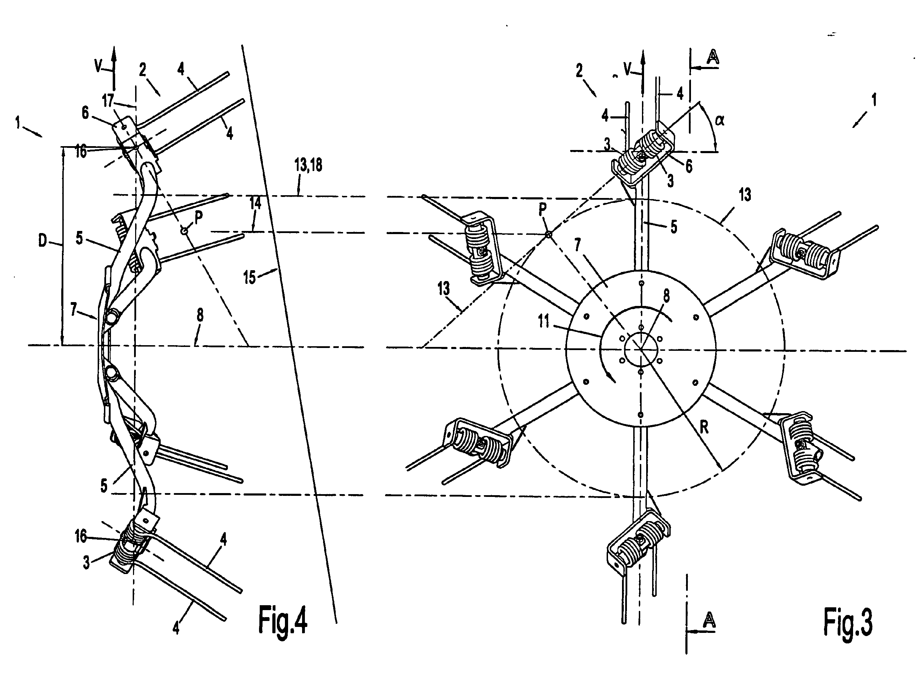

Die Figuren Fig.1 bis Fig.4 verdeutlichen die nachfolgend beschriebene Erfindung.
Fig.1 zeigt zwei nebeneinander liegende Rechkreisel 1 einer nicht näher dargestellten Heuwerbungsmaschine und insbesondere die eines Kreiselzetters in einer Draufsicht auf die Rotationsebenen der Rechkreisel.
Fig.2 zeigt analog Fig.1 zwei nebeneinander liegende Rechkreisel 1 mit nach vorn in Fahrtrichtung V geneigten Rechkreiseln 1 in an sich bekannter Arbeitsstellung.
Fig.3 zeigt einen einzelnen Rechkreisel in der Draufsicht und Fig.4 zeigt den Schnitt A-A gemäß Fig.4.

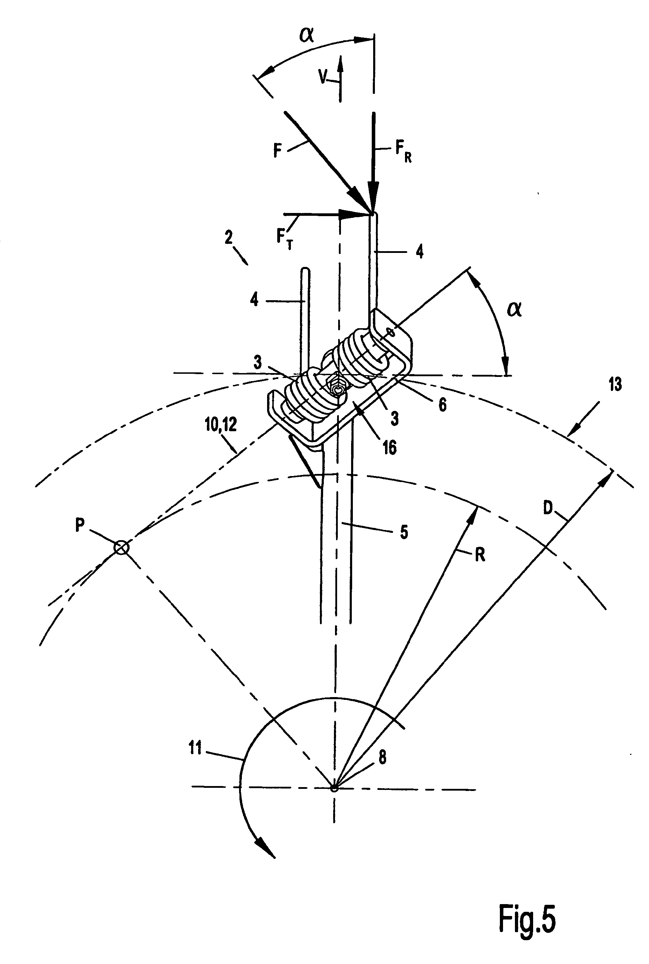

Fig.5 zeigt einen vergrößerten Auszug aus Fig.3 und insbesondere einen Rechzinken 2, befestigt an dem Zinkenarm 5 im Augenblick des Eingriffs mit dem am Boden 15 liegenden Rechgut im vordersten in Fahrtrichtung Kraftvektoren vorn liegenden Eingriffspunkt. Dabei sind die Biegekräfte F_{R} und F_{T}, welche an einem Federschenkel 4 angreifen, als Kraftvektoren angedeutet.

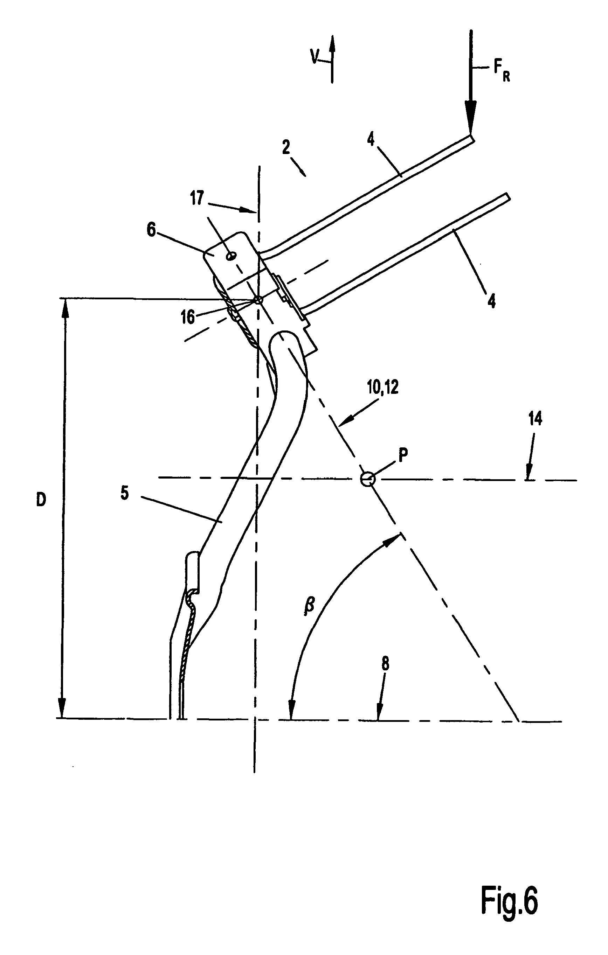

Fig.6 zeigt einen vergrößerten Auszug aus Fig.4 und insbesondere einen Rechzinken 2, befestigt an dem Zinkenarm 5 und zwar im Augenblick des Eingriffs mit dem am Boden 15 liegenden Rechgut im vordersten in Fahrtrichtung V vorn liegenden Eingriffspunkt analog Fig.4. Auch hier ist die Biegekraft F_{R} an dem Federschenkel 4 als Kraftvektor dargestellt. Dabei steht die Biegekraft F_{T} lotrecht zur Zeichenebene, so dass diese in dieser Darstellung nicht angetragen werden kann.

Die maximale Biegebelastung des Rechzinkens 2 eines Rechkreisels 1 wird während der Fahrbewegung V und der Umlaufbewegung 11,11' dann erreicht, wenn ein Rechzinken 2 im Eingriff mit dem am Boden liegenden Grünfutter bzw. Rechgut steht und dabei die Geschwindigkeitsvektoren der Umlaufbewegung 11,11' und der Fahrbewegung V rechtwinklig zueinander verlaufen.

Dieses ist darin begründet, dass die auf die Federschenkel 4 des Rechzinkens 2 einwirkenden Biegekräfte F_{R} und F_{T}, welche aus den Widerstandskräften der beiden Geschwindigkeitsvektoren resultieren, eine resultierende Widerstandskraft erzeugen, welche als resultierende Biegekraft F in diesem Augenblick auf den Federschenkel 4 einwirkt.

Die Wirkungslinie der resultierenden Biegekraft F_{R} stimmt somit nicht mehr mit der Richtung der momentanen Umlaufbewegung 11,11' überein, sondern sie weicht um einen Winkel α von dieser ab.

Eine annähernd optimal dämpfende Wirkung in Bezug auf die Biegebelastung bzw. Biegespannungen der Federwindungen 3 können die Rechzinken 2 in Bezug auf die Umlaufbewegung 11,11' der Rechzinken 2 nur dann entfalten, wenn die Wickelachse 10 der Federwindungen 3 lotrecht zur Wirkungslinie 12 der angreifenden maximalen, und damit resultierenden Biegekraft F verläuft.

Die Erfindung besteht darin, dass die Wickelachse 10 der federnden Windung 3 etwa lotrecht zur Richtung der Wirkungslinie 12 der maximalen und damit resultierenden Biegekraft F_{R} ausgerichtet ist, welches bedeutet, dass die Wickelachse 10 in Bezug auf die Hochachse 8, der Kreiselachse des Rechkreisels 1, schräg im Raum steht und dabei einen tangentialen Anstellwinkel α und zugleich einen axialen Anstellwinkel β relativ zur Hochachse 8 des Rechkreisels 1 aufweist.

Gekennzeichnet ist der Verlauf der Wickelachse 10 dadurch, dass diese einen gedachten Zylinder 13 mit dem Radius R, dessen Figurenachse mit der Hochachse 8 des Rechkreisels 1 zusammenfällt, als Tangente in einem Punkt P berührt. Der so gedachte Zylinder 13 weist den Zylindermantel 18 auf wobei eine Mantellinie 14 durch den Punkt P verläuft.

Dabei liegt der Punkt P unterhalb der Rotationsebene 17 des Befestigungspunkts 16 des Federzinkes 2 am Zinkenarm 5, dem Erdboden 15 zugewandt. Dabei liegt der Radius R des Punkts P des gedachten Zylinders 13 vorzugsweise im Bereich von 75% ±15% des Radius R des Befestigungspunkts 16 des Rechzinkens 2 an seinem Zinkenarm 5, und wobei zugleich der Radius D das Abstandsmaß zur Hochachse 8 des Rechkreisels 1 in der Rotationsebene 17 des Befestigungspunkts 16 definiert.

Erfindungsgemäß hat dies zur Folge, dass die Federwindungen 3 ihre optimale Wirkung in Bezug auf die Biegekraft F_{R} zur Entfaltung bringen können, was somit die Gefahr eines Ermüdungsbruches der Rechzinken verringert und damit die Zeitstandsfestigkeit eines Rechzinkens wesentlich verbessert.

Der Anstellwinkel α kann beispielsweise durch eine Abwinklung des, den Rechzinken aufnehmenden Zinkenarms 5, sowohl in tangentiale Richtung, als auch in axialer Richtung erfolgen oder alternativ auch durch eine axiale Abwinkelung des Zinkenarms und eine tangentiale Anstellung des gesamten Zinkenarms in Bezug auf die Hochachse 8 des Rechkreisels 1. Der Anstellwinkel α liegt dabei vorteilhafterweise und bevorzugt im Bereich von etwa 30 +/- 15° und der Anstellwinkel β vorzugsweise im Bereich von etwa 60 +/-15°

### Bezugszeichenliste

- 1: Rechkreisel
- 2: Rechzinken, (Doppelrechzinken)
- 3: Federwindung
- 4: Federschenkel
- 5: Zinkenarm
- 6: Zinkenhalterung
- 7: Flanschdeckel
- 8: Hochachse
- 9,9': Drehrichtungen
- 10: Wickelachse
- 11,11': Umlaufbewegung
- 12: Wirkungslinie
- 13: gedachter Zylinder
- 14: Mantellinie
- 15: Erdboden
- 16: Befestigungspunkt
- 17: Rotationsebene
- 18: Zylindermantel
- F_{R}: Biegekraft (Radialkraft)
- F_{T}: Biegekraft (Tangentialkraft)
- F: resultierende Biegekraft (Resultante)
- V: Fahrbewegung (Fahrtrichtung)
- R: Radius eines gedachten Zylinders
- D: Radius
- P: Punkt
- α: Anstellwinkel
- β: Anstellwinkel

## Patentansprüche

1. Heuwerbungsmaschine mit wenigstens einem umlaufend um eine Hochachse (8) antreibbaren Rechkreisel (1) mit Zinkenarme aufweisenden Rechzinken (2), deren Rechzinken (2) eine Federwicklung mit um eine Wickelachse (10) geformten Federwindungen und wenigstens einen sich daran anschließenden Federschenkel aufweisen, **dadurch gekennzeichnet, dass** die Wickelachse (10) eines Rechzinkens (2) derart schräg im Raum steht, dass diese einen tangentialen Anstellwinkel (α) und einen axialen Anstellwinkel (β) relativ zur Hochachse (8) des Rechkreisels (1) aufweist, wobei die Wickelachse (10) als Tangente an einem gedachten Zylinder (13) mit dem Radius (R), dessen Figurenachse zugleich mit der Hochachse (8) des Rechkreisels (1) zusammenfällt, in einem Punkt (P) der Mantellinie (14) des Zylindermantels (18) des gedachten Zylinders (13) anliegt und wobei der Punkt (P) unterhalb der Rotationsebene (17) des Befestigungspunkts (16) des Rechzinkens (2) am Zinkenarm (5), dem Erdboden (15) zugewandt liegt und der axiale Anstellwinkel (β) in einer Seitenansicht (A-A) zu betrachten ist, wobei der Anstellwinkel (α) im Bereich von 30 ±15°liegt.

2. Heuwerbungsmaschine nach Anspruch 1, **dadurch gekennzeichnet, dass** der Anstellwinkel (β) im Bereich von 60 ±15° liegt.

3. Heuwerbungsmaschine nach Anspruch 1, **dadurch gekennzeichnet, dass** der Radius (R) des Punkts (P) des gedachten Zylinders (13) vorzugsweise im Bereich von 75% ±15% des Radius (D) des Befestigungspunkts (16) der Rechzinken (2) als Abstandsmaß zur Hochachse (8) des Rechkreisels (1) liegt.

4. Heuwerbungsmaschine nach Anspruch 1 bis 3, **dadurch gekennzeichnet, dass** der Anstellwinkel (α) durch eine Abwinklung des den Rechzinken (2) aufnehmenden Zinkenarms (5) vorgegeben ist.

5. Heuwerbungsmaschine nach Anspruch 1 bis 3, **dadurch gekennzeichnet, dass** der Anstellwinkel (α) durch eine tangentiale Anstellung des gesamten Zinkenarms (5) in Bezug auf die Hochachse (8) des Rechkreisels (1) vorgegeben ist.

## Claims

1. A haymaking machine comprising at least one rake rotor (1) which is drivable in rotation about a vertical axis (8) and has rake tines (2) which have tine arms, the rake tines (2) of which have a spring winding with spring turns shaped around a winding axis (10) and at least one spring limb adjoining same, **characterised in that** the winding axis (10) of a rake tine (2) is disposed inclinedly in space in such a way that it has a tangential setting angle (α) and an axial setting angle (β) relative to the vertical axis (8) of the rake rotor (1, wherein the winding axis (10) bears as a tangent against a notional cylinder (13) having the radius (R), the figure axis of which coincides at the same time with the vertical axis (8) of the rake rotor (1), at a point (P) on the cylindrical surface line (14) of the cylindrical surface (18) of the notional cylinder (13) and wherein the point (P) is disposed facing towards the ground beneath the plane of rotation (17) of the fixing point (16) of the rake tine (2) on the tine arm (5) and the axial setting angle (β) is to be viewed in a side view (A-A), wherein the setting angle (α) is in the range of 30 ± 15°.

2. A haymaking machine according to claim 1 **characterised in that** the setting angle (β) is in the range of 60 ± 15°.

3. A haymaking machine according to claim 1 **characterised in that** the radius (R) of the point (P) of the notional cylinder (13) is preferably in the range of 75% ± 15% of the radius (D) of the fixing point (16) of the rake tines (2) as a spacing dimension relative to the vertical axis (8) of the rake rotor (1).

4. A haymaking machine according to claims 1 to 3 **characterised in that** the setting angle (α) is predetermined by an angular configuration of the tine arm (5) carrying the rake tine (2).

5. A haymaking machine according to claims 1 to 3 **characterised in that** the setting angle (α) is predetermined by a tangential setting of the entire tine arm (5) in relation to the vertical axis (8) of the rake rotor (1).

## Revendications

1. Machine de fenaison comportant au moins un rotor de râtelage (1) pouvant être entraîné en rotation autour d'un axe vertical (8) et pourvu de dents de râtelage (2) présentant des bras porte-dents, dont les dents de râtelage (2) présentent un ressort enroulé avec des spires de ressort formées autour d'un axe d'enroulement (10) et au moins une branche de ressort s'y raccordant, **caractérisée en ce que** l'axe d'enroulement (10) d'une dent de râtelage (2) est inclinée dans l'espace de façon qu'elle présente un angle de positionnement tangentiel (α) et un angle de positionnement axial (β) par rapport à l'axe vertical (8) du rotor de râtelage (1), l'axe d'enroulement (10) étant tangent à un cylindre imaginaire (13) de rayon (R) dont l'axe de figure coïncide en même temps avec l'axe vertical (8) du rotor de râtelage (1) en un point (P) de la génératrice (14) de l'enveloppe de cylindre (18) du cylindre imaginaire (13), le point (P) étant situé au-dessous du plan de rotation (17) du point de fixation (16) de la dent de râtelage (2) sur le bras porte-dents (5) et étant tourné vers le sol (15), et l'angle de positionnement axial (β) devant être considéré dans une vue de côté (A-A), l'angle de positionnement (α) se situant dans la plage de 30 ± 15°.

2. Machine de fenaison selon la revendication 1, **caractérisée en ce que** l'angle de positionnement (β) se situe dans la plage de 60 ± 15°.

3. Machine de fenaison selon la revendication 1, **caractérisée en ce que** le rayon (R) du point (P) du cylindre imaginaire (13) se situe de préférence dans la plage de 75 % ± 15 % du rayon (D) du point de fixation (16) des dents de râtelage (2) en tant que distance à l'axe vertical (8) du rotor de râtelage (1).

4. Machine de fenaison selon les revendications 1 à 3, **caractérisée en ce que** l'angle de positionnement (α) est prédéfini par un coudage du bras porte-dents (5) recevant la dent de râtelage (2).

5. Machine de fenaison selon les revendications 1 à 3, **caractérisée en ce que** l'angle de positionnement (α) est prédéfini par un positionnement tangentiel de l'ensemble du bras porte-dents (5) par rapport à l'axe vertical (8) du rotor de râtelage (1).
